# EUROPÄISCHE PATENTSCHRIFT

(11) **EP 2 334 736 B1**
(45) Veröffentlichungstag und Bekanntmachung des Hinweises auf die Patenterteilung: **24.07.2013**
(21) Anmeldenummer: 09782383.5
(22) Anmeldetag: 31.08.2009
(51) Int. Cl.: C08L 83/04

(54) **SILICONELASTOMERE MIT VERBESSERTER EINREISSFESTIGKEIT**
SILICONE ELASTOMERS WITH IMPROVED CRACK RESISTANCE
ELASTOMÈRES SILICONES DOTÉS D UNE MEILLEURE RÉSISTANCE AUX DÉCHIRURES

(30) Priorität: 10.09.2008 DE 102008041940
(43) Veröffentlichungstag der Anmeldung: 22.06.2011
(73) Patentinhaber: Wacker Chemie AG, 81737 München (DE)
(72) Erfinder: WÖRNER, Christof, 84489 Burghausen (DE)
(74) Vertreter: Fritz, Helmut
(86) Internationale Anmeldenummer: PCT/EP2009/061192
(87) Internationale Veröffentlichungsnummer: WO 2010/028969

(56) Entgegenhaltungen:
- EP-A- 1 182 231
- EP-A- 1 721 937
- US-A- 5 668 225
- US-B2- 7 148 306

## Beschreibung

Die Erfindung betrifft additionsvernetzbare Siliconmassen (M), die zu Siliconelastomeren mit guter Einreißfestigkeit vernetzen, ein Verfahren zur Herstellung der additionsvernetzbaren Siliconmassen (M) und die vernetzten Siliconelastomere.

Bekanntermaßen weisen Fertigteile aus Siliconelastomeren bei Kontakt mit scharfkantigen Gegenständen, wie z.B. Messern, scharfkantigen Profilen oder Metallteilen, eine in vielen Anwendungen nicht ausreichende Einreißfestigkeit auf. Dies führt immer wieder zu Beschädigungen an den Fertigteilen, wenn diese z.B. bei der Montage in Kontakt mit einem scharfen Metall- oder Kunststoffteil kommen. Dichtungen aus Siliconkautschuk werden oft mit Metall- oder Kunststoffteilen zu 2-Komponentenbauteilen kombiniert, wobei die Silicondichtung über ein scharfkantiges Metall- oder Kunststofffertigteil geschoben wird oder ein scharfes Metall- oder Kunststofffertigteil durch eine Kavität der Silicondichtung hindurchgeschoben wird. Dabei kommt es immer wieder zu Beschädigungen der Silicondichtung und damit zur Zerstörung des Zweikornponentenbauteils.

Zwar ist dieses Phänomen bekannt, in der Literatur findet man aber wenige Hinweise, wie sich die Einreißfestigkeit von Siliconelastomeren verbessern lässt.

Bei Handschuhen aus organischen Kautschuken wird die Einreißfestigkeit z.B. durch Einsatz von Metalldrähten oder Fasern verbessert (EP1911866).

In WO 9918156 wird die Einreißfestigkeit von organischen Kautschuken und Siliconelastomeren durch den Zusatz von Füllstoffen mit einer Mohs Härte von mindestens 3 verbessert. Dabei werden vorzugsweise plättchenförmige inaktive Füllstoffe aus Metall, Keramik oder kristallinen Mineralien verwendet. Durch die Verwendung dieser inaktiven Füllstoffe können jedoch nur mäßige mechanische Eigenschaften realisiert werden. Außerdem lassen sich diese Materialien im Spritzguss schlecht verarbeiten, da die verwendeten Füllstoffe eine sehr hohe Abrasivität aufweisen.

Watanabe beschreibt in JP 07082488, dass sich mithilfe von Glimmer und Polydimethylsiloxan-Ölen die Einreißfestigkeit von peroxidisch vernetzenden Festsiliconkautschuken verbessern lässt. Allerdings werden beim Einsatz von Glimmer nur mittlere mechanische Eigenschaften realisiert. Für zahlreiche Anwendungen werden jedoch Siliconelastomere benötigt, die sich schnell vernetzen lassen, eine ausgezeichnete Reißfestigkeit und Reißdehnung haben sowie eine deutlich verbesserte Einreißfestigkeit aufweisen.

Der vorliegenden Erfindung liegt die Aufgabe zugrunde, additionsvernetzbare Siliconmassen bereitzustellen, die schnell zu Siliconelastomeren mit guter Einreißfestigkeit vernetzen und auch noch gute mechanische Eigenschaften besitzen.

Gegenstand der Erfindung sind additionsvernetzbare Siliconmassen (M), enthaltend
(A) 100 Gewichtsteile Alkenylgruppen haltiges Polydiorganosiloxan mit mindestens 2 Alkenylgruppen pro Molekül, einer Viskosität von mindestens 1 000 000 mPa·s, einem OH-Gehalt < 50 Gew.-ppm und höchstens 0,3 mol-% Alkenylgruppen,
(B) SiH-funktionelles Vernetzungsmittel,
(C) Hydrosilylierungskatalysator ,
(D) 10-80 Gewichtsteile eines verstärkenden Füllstoffs mit einer spezifischen Oberfläche von 50 m²/g bis 350 m²/g und
(E) Siliconöl mit einer Viskosität von 20-5000 mPa·s, dessen Reste ausgewählt werden aus Phenyl- und C₁₋₆-Alkylresten, wobei mindestens 5 mol-% aller Reste Phenylreste sind.

Die additionsvernetzbaren Siliconmassen (M) vernetzen zu Siliconelastomeren mit guter Einreißfestigkeit, die auch noch gute mechanische Eigenschaften besitzen.

Die vernetzten Siliconelastomere besitzen bevorzugt eine Härte von mindestens 3, besonders bevorzugt mindestens 5, insbesondere mindestens 10 Shore A, und bevorzugt höchstens 70, besonders bevorzugt höchstens 60, insbesondere höchstens 50 Shore A.

Das in den additionsvernetzbaren Siliconmassen (M) enthaltene Alkenylgruppen haltige Polydiorganosiloxan (A) kann aus einem Polymer oder aus einer Mischung von Polymeren bestehen. In einer Mischung müssen aber alle Bestandteile mindestens 2 Alkenylgruppen pro Molekül und höchstens 0,3 mol-% Alkenylgruppen aufweisen.

Im Alkenylgruppen haltigen Polydiorganosiloxan (A) sind vorzugsweise die Alkenylgruppen endständig. Die Alkenylgruppen sind insbesondere Vinyl- oder Allylgruppen. Vorzugsweise sind die kettenständigen Gruppen C₁₋₆-Alkyl- oder Alkenylgruppen, insbesondere Methyl-, Ethyl-, Vinyl- oder Allylgruppen.

Das Alkenylgruppen haltige Polyorganosiloxan (A) zeigt bevorzugt eine Viskosität von mindestens 2 000 000 mPa·s, besonders bevorzugt mindestens 5 000 000 mPa·s und bevorzugt höchstens 50 000 000 mPa·s.

Das Alkenylgruppen haltige Polyorganosiloxan (A) weist vorzugsweise pro Molekül höchstens 0,2 mol-%, insbesondere höchstens 0,15 mol-% Alkenylgruppen auf. Polyorganosiloxan (A) trägt bevorzugt keine kettenständigen Vinylgruppen.

Das SiH-funktionelle Vernetzungsmittel (B) ist vorzugsweise eine siliciumorganische Verbindung oder eine Mischung aus mindestens 2 siliciumorganischen Verbindungen, welche mindestens zwei, bevorzugt mindestens drei an Silicium gebundene Wasserstoffatome pro Molekül enthalten.

Das Vernetzungsmittel (B) wird vorzugsweise in den Siliconmassen (M) in einer solchen Menge eingesetzt, dass das Verhältnis seiner an Silicium gebundenen Wasserstoffatome zur Summe der Alkenylgruppen der Polyorganosiloxane (A) + Kohlenstoff-Kohlenstoff-Mehrfachbindungen der Füllstoffe (D) mindestens 1,1 : = 1, bevorzugt höchstens 5 : 1 insbesondere höchstens 3 : = 1 beträgt.

Das Vernetzungsmittel (B) besteht vorzugsweise aus Einheiten der durchschnittlichen allgemeinen Formel (1)

HₐR¹_{b}SiO(_{4-a-b})_{/2} (1),

wobei
- **R¹**: einwertige, gegebenenfalls halogen- oder cyanosubstituierte, über SiC-gebundene C₁-C₁₀-Kohlenwasserstoffreste, die frei sind von aliphatischen Kohlenstoff-Kohlenstoff-Mehrfachbindungen,
- **a**: 0, 1, 2 oder 3,
- **b**: 0, 1, 2 oder 3, und
die Summe a+b≤3
bedeuten,
mit der Maßgabe, dass mindestens zwei siliciumgebundene Wasserstoffatome pro Molekül vorhanden sind.

Beispiele für unsubstituierte Reste R¹ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der ß-Phenylethylrest.

Beispiele für substituierte Kohlenwasserstoffreste als Reste R¹ sind halogenierte Kohlenwasserstoffe, wie der Chlormethyl-, 3-Chlorpropyl-, 3-Brompropyl, 3,3,3-Trifluorpropyl und 5,5,5,4,4,3,3-Hexafluorpentylrest sowie der Chlorphenyl-, Dichlorphenyl- und Trifluortolylrest.

R¹ weist vorzugsweise 1 bis 6 Kohlenstoffatome auf. Insbesondere bevorzugt sind Methyl, 3,3,3-Trifluorpropyl und Phenyl.

Der Wasserstoffgehalt dess Vernetzungsmittels (B), welcher sich ausschließlich auf die direkt an Siliciumatome gebundenen Wasserstoffatome bezieht, liegt vorzugsweise im Bereich von 0,002 bis 1,7 Gew.-% Wasserstoff, besonders bevorzugt von 0,1 bis 1,7 Gew.-% Wasserstoff.

Das Vernetzungsmittel (B) enthält vorzugsweise mindestens drei und höchstens 600 Siliciumatome pro Molekül. Besonders bevorzugt ist die Verwendung von Vernetzungsmitteln (B), die 4 bis 200 Siliciumatome pro Molekül enthalten.

Die Struktur des Vernetzungsmittels (B) kann linear, verzweigt, cyclisch oder netzwerkartig sein.

Besonders bevorzugte Vernetzungsmittel (B) sind lineare Polyorganosiloxane der durchschnittlichen allgemeinen Formel (2)

(R²₃SiO_{1/2})_{d}(HR²SiO_{2/2})ₑ(R²₂SiO_{2/2})_{f} (2),

worin
- **R²**: die Bedeutungen von R¹ hat und
- **d, e, f**: den Wert 0 oder positive ganze Zahlen bedeuten, mit der Maßgabe, dass die Gleichungen d = 2, e > 2, 5 < (**e+f**) < 200 und 0,1 < e/(e +f) < 1 erfüllt sind.

Als Hydrosilylierungskatalysator (C) können vorzugsweise alle bekannten Katalysatoren eingesetzt werden, welche die bei der Vernetzung von additionsvernetzenden Siliconmassen (M) ablaufenden Hydrosilylierungsreaktionen katalysieren.

Die Hydrosilylierungskatalysatoren (C) werden insbesondere ausgewählt aus den Metallen Platin, Rhodium, Palladium, Ruthenium und Iridium und deren Verbindungen.

Vorzugsweise werden Platin oder Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden beziehungsweise Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan. Ebenfalls sehr geeignet sind die in EP 1 077 226 A1 und EP 0 994 159 A1 beschriebenen Platinverbindungen, deren diesbezügliche Offenbarung auch in dieser Anmeldung enthalten sein soll.

Der Hydrosilylierungskatalysator (C) kann in jeder beliebigen Form eingesetzt werden, beispielsweise auch in Form von Hydrosilylierungskatalysator enthaltenden Mikrokapseln, oder Polyorganosiloxanpartikeln, wie beschrieben in EP 1 006 147 A1, deren diesbezügliche Offenbarung auch in dieser Anmeldung enthalten sein soll.

Der Gehalt an Hydrosilylierungskatalysatoren (C) wird so gewählt, dass die additionsvernetzbare Siliconmasse (M) bevorzugt einen Pt-Gehalt von 0,1 bis 200 ppm, besonders bevorzugt von 0,5 bis 40 ppm besitzt.

Die additionsvernetzbaren Siliconmassen (M) enthalten vorzugsweise mindestens 15, besonders bevorzugt mindestens 20 Gewichtsteile und bevorzugt höchstens 70, besonders bevorzugt höchstens 60 Gewichtsteile verstärkenden Füllstoff (D).

Die spezifische Oberfläche des verstärkenden Füllstoffs (D) beträgt vorzugsweise mindestens 100, besonders bevorzugt mindestens 120 m²/g und bevorzugt höchstens 350, besonders bevorzugt höchstens 250 m²/g.

Der verstärkende Füllstoff (D) wird bevorzugt ausgewählt aus gefällten und pyrogenen Kieselsäuren sowie Ruß.

Bevorzugt sind gefällte und pyrogene Kieselsäuren, sowie Gemische derselben. Besonders bevorzugt sind mit Silyliermittel oberflächenbehandelte pyrogene Kieselsäuren. Die Hydrophobierung der Kieselsäure kann entweder vor der Einarbeitung in das Polyorganosiloxan erfolgen oder auch in Gegenwart eines Polyorganosiloxans nach dem in-situ Verfahren. Beide Verfahren können sowohl im Batch-Prozess als auch kontinuierlich durchgeführt werden. Als Silylier-Agenzien können alle dem Fachmann bekannten Hydrophobiermittel verwendet werden, wobei auch zusätzlich Wasser eingesetzt werden kann. Silylier-Agenzien sind vorzugsweise Silazane, insbesondere Hexamethyldisilazan und/oder 1,3-Divinyl-1,1,3,3-tetramethyldisilazan, und/oder Polysilazane. Zusätzlich können auch andere Silylier-Agenzien, wie beispielsweise SiOH- und/oder SiCl- und/oder Alkoxy-funktionelle Silane beziehungsweise Siloxane als Hydrophobiermittel verwendet werden. Ebenso können zyklische, lineare oder verzweigte nichtfunktionelle Organosiloxane, wie beispielsweise Octamethylcyclotetrasiloxan oder Polydimethylsiloxan, jeweils für sich genommen oder zusätzlich zu Silazanen als Silylier-Agenzien eingesetzt werden. Um die Hydrophobierung zu beschleunigen, ist auch der Zusatz von katalytisch aktiven Additiven, wie beispielsweise Hydroxiden, möglich. Die Hydrophobierung kann in einem Schritt unter Verwendung von einem oder mehreren Hydrophobiermitteln, aber auch unter Verwendung von einem oder mehreren Hydrophobiermitteln in mehreren Schritten erfolgen.

Bevorzugt sind gefällte oder pyrogene Kieselsäuren. Besonders bevorzugt ist eine Kieselsäure mit einer spezifischen Oberfläche nach BET von 80-350 m²/g, besonders bevorzugt 100-300 m²/g.

Die additionsvernetzbaren Siliconmassen (M) enthalten vorzugsweise mindestens 1, besonders bevorzugt mindestens 3, insbesondere mindestens 5, und vorzugsweise höchstens 30, besonders bevorzugt höchstens 15, insbesondere höchstens 10 Gewichtsteile an Siliconöl (E).

Das Siliconöl (E) zeigt bevorzugt eine Viskosität von mindestens 50 mPa·s, besonders bevorzugt mindestens 100 mPa·s und bevorzugt höchstens 2000 mPa·s, besonders bevorzugt höchstens 1000 mPa·s.

Vorzugsweise sind mindestens 15 mol-%, besonders bevorzugt mindestens 20 mol-% und bevorzugt höchstens 80 mol-%, besonders bevorzugt höchstens 60 mol-% aller Reste im Siliconöl (E) Phenylreste.

Im Siliconöl (E) werden die C₁₋₆-Alkylgruppen vorzugsweise ausgewählt aus Methyl- und Ethylgruppen.

vorzugsweise ist das Siliconöl (E) aufgebaut aus Einheiten, die ausgewählt werden aus Trimethylsiloxy-, Diphenylsiloxy-, Phenylmethylsiloxy- und Dimethylsiloxy-Einheiten.

Die additionsvernetzbaren Siliconmassen (M) können wahlweise als weiteren Bestandteil (F) mögliche Zusätze zu einem Anteil von 0 bis 150 Gewichtsteilen, vorzugsweise 0,0001 bis 50 Gewichtsteilen, enthalten. Diese Zusätze können beispielsweise harzartige Polyorganosiloxane, die von den Polyorganosiloxanen (A), (B) und (E) verschieden sind, Dispergierhilfsmittel, Lösungsmittel, Haftvermittler, Pigmente, Farbstoffe, Weichmacher, organische Polymere, Hitzestabilisatoren, Inhibitoren usw. sein. Hierzu zählen Zusätze wie Farbstoffe, Pigmente usw. Des Weiteren können als Bestandteil thixotropierende Bestandteile, wie hochdisperse Kieselsäure oder andere handelsübliche Thixotropieadditive enthalten sein.

Enthalten sein können weitere Zusätze, die der gezielten Einstellung der verarbeitungszeit, Anspringtemperatur und Vernetzungsgeschwindigkeit der vernetzenden Massen dienen. Diese Inhibitoren und Stabilisatoren sind auf dem Gebiet der vernetzenden Massen sehr gut bekannt.

Zusätzlich können auch Additive hinzugefügt werden, wie beispielsweise die in EP 0 834 534 A1 beschriebenen Schwefelverbindungen, deren diesbezügliche Offenbarung auch in dieser Anmeldung enthalten sein soll, die den Druckverformungsrest verbessern. Zusätzlich können auch Hohlkörper beziehungsweise expandierbare Hohlkörper hinzugefügt werden. Zusätzlich können auch Treibmittel zur Erzeugung von Schäumen hinzugefügt werden.

Weitere Gegenstände der vorliegenden Erfindung sind ein Verfahren zur Herstellung der additionsvernetzbaren Siliconmassen (M), ein Verfahren zur Herstellung der vernetzten Siliconelastomere aus den additionsvernetzbaren Siliconmassen (M) sowie die so erhältlichen Siliconelastomer-Formteile.

Die Herstellung oder Compoundierung der Siliconmassen erfolgt bevorzugt durch Mischen des Polyorganosiloxans (A), des Siliconöls (E) und Füllstoffs (D). Die Vernetzung nach Zugabe von Vernetzungsmittel (B) und Hydrosilylierungskatalysator (C) erfolgt vorzugsweise durch Erwärmen, vorzugsweise bei 30 bis 250°C, bevorzugt bei mindestens 50°C, insbesondere bei mindestens 100°C, bevorzugt bei 150-210°C.

Die additionsvernetzbaren Siliconmassen (M) eignen sich zur Herstellung von additionsvernetzenden HTV-Massen, wobei vorzugsweise die erste Komponente neben dem Hydrosilylierungskatalysator (C) und die zweite Komponente den SiH-Vernetzer (B) enthält. Beim Einsatz von 1K-Katalysatoren, wie z.B. in EP 1 077 226 A1 und EP 0 994 159 A1 beschrieben, können auch einkomponentige Mischungen hergestellt werden.

Hierzu werden die Formteile vorzugsweise mittels Spritzguss aus den unter Verwendung der additionsvernetzbaren Siliconmassen (M) hergestellten HTV-Massen hergestellt. Beispielweise lassen sich so aus den additionsvernetzbaren Siliconmassen (M) Dichtungen erhalten, die sich insbesondere durch ihre exzellente Einschnittfestigkeit auszeichnen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) und einer Temperatur von 20°C durchgeführt. Im folgenden beziehen sich alle Viskositätsangaben auf eine Temperatur von 25°C.

### Beispiele

### Beispiel 1* (nicht erfindungsgemäß)

### Herstellung der Grundmasse 1:

In einem Laborkneter wurden 260 g eines vinyldimethylsiloxyterminierten Polydimethylsiloxans mit einer Viskosität von 100 000 mPa·s (25°C) vorgelegt (Vinylsiloxy-Gehalt von 0,16 Mol.-%), auf 150°C aufgeheizt und mit 80 g einer mit Hexamethyldisilazan hydrophobierten pyrogenen Kieselsäure mit einer spezifischen Oberfläche nach BET von 150 m²/g und einem Kohlenstoffgehalt von 3,2 Gew.-% versetzt. Es entstand eine hochviskose Masse, die anschließend bei 150°C durch Kneten unter Vakuum (10 mbar) innerhalb von einer Stunde ausgeheizt wurde, um flüchtige Bestandteile zu entfernen.

### Herstellung der vernetzbaren Mischung:

Zu 330 g Grundmasse wurden 0,30 g Ethinylcyclohexanol, 4,5 g eines Mischpolymerisats aus Dimethylsiloxy-, Methylhydrogensiloxy- und Trimethylsiloxy-Einheiten mit einer Viskosität von 250 mPa·s bei 25°C und einem SiH-Gehalt von 0,48 Gew-%, 0,48 g eines Platin-sym-Divinyltetramethyldisiloxan-Komplexes enthaltenden Lösung, die 1 Gew.-% Pt enthält, sowie 16,5 g eines trimethylsiloxy-terminierten Polydiorganosiloxans mit 33 mol-% Diphenylsiloxy- und 66 mol-% Dimethylsiloxy-Einheiten und einer Viskosität von 200 mPa·s (25°C) hinzugefügt.

Die auf diese Weise hergestellte Siliconmasse wurde anschließend in einer hydraulischen Presse bei einer Temperatur von 165°C innerhalb von 15 Minuten vernetzt und anschließend 4 Stunden bei 200°C getempert.

### Beispiel 2* (nicht erfindungsgemäß):

### Herstellung der Grundmasse 2:

Im Unterschied zu Beispiel 1 wurde bei der Herstellung der Grundmasse 2 nicht ein vinyldimethylsiloxy-terminiertes Polydimethylsiloxan mit einer Viskosität von 100 000 mPa·s (25°C) sondern ein vinyldimethylsiloxy-terminiertes Polydimethylsiloxan mit einer Viskosität von 14 000 000 mPa·s (25°C), welches zusätzlich Vinylmethylsiloxy-Einheiten in der Polymerkette und einen Anteil an Vinylsiloxy-Einheiten von 0,4 mol-% enthält, verwendet.
Die Herstellung der vernetzbaren Mischung und die Vernetzung sowie die anschließende Temperung der additionsvernetzenden Masse erfolgte wie in Beispiel 1 beschrieben.

### Beispiel 3:

### Herstellung der Grundmasse 3:

Im Unterschied zu Beispiel 1 wurde bei der Herstellung der Grundmasse 3 nicht ein vinyldimethylsiloxy-terminiertes Polydimethylsiloxan mit einer Viskosität von 100 000 mPa·s (25°C) sondern ein vinyldimethylsiloxy-terminiertes Polydimethylsiloxan mit einer Viskosität von 16 000 000 mPa·s (25°C), welches zusätzlich Vinylmethylsiloxy-Einheiten in der Polymerkette und einen Anteil an Vinylsiloxy-Einheiten von 0,12 mol-% enthält, verwendet.
Die Herstellung der vernetzbaren Mischung und die Vernetzung sowie die anschließende Temperung der additionsvernetzenden Masse erfolgte wie in Beispiel 1 beschrieben.

**Tabelle 1:**

| | Härte | Weiterreißwiderstand(ASTMD624) | Reißfestigkeit | Reißdehnung | Einreißfestigkeit |
|---|---|---|---|---|---|
| | [Shore A] | [N/mm] | [N/mm2] | [%] | [Eindring-tiefe in mm] |
| Beispiel 1* | 31 | 15 | 7,5 | 650 | 2 |
| Beispiel 2* | 33 | 25 | 9,5 | 750 | 4 |
| Beispiel 3 | 30 | 18 | 8,5 | 800 | 10 |

| | | | | | |
|---|---|---|---|---|---|
| * nicht erfindungsgemäß | | | | | |

Aus Tabelle 1 ist ersichtlich, dass durch Verwendung eines hochviskosen, vinylarmen Polydiorganosiloxans die Einreißfestigkeit deutlich verbessert werden kann.

### Beispiel 4

### Herstellung der Grundmasse 4:

Im Unterschied zu Beispiel 1 wurde bei der Herstellung der Grundmasse 4 nicht ein vinyldimethylsiloxy-terminiertes Polydimethylsiloxan mit einer Viskosität von 100 000 mPa·s (25°C) sondern ein vinyldimethylsiloxy-terminiertes Polydimethylsiloxans mit einer Viskosität von 15 000 000 mPa·s (25°C), welches zusätzlich Vinylmethylsiloxy-Einheiten in der Polymerkette und einen Anteil an vinylsiloxy-Einheiten von 0,08 mol-% enthält, verwendet sowie die in Beispiel 1 beschriebene pyrogene Kieselsäure, allerdings mit einer Oberfläche von 200 m²/g.
Die Herstellung der vernetzbaren Mischung, die Vernetzung sowie die anschließende Temperung der additionsvernetzenden Masse erfolgte wie in Beispiel 1 beschrieben.

### Beispiel 5* (nicht erfindungsgemäß)

Zu 330 g der in Beispiel 4 beschriebene Grundmasse 4 wurde mit 16,5 g des in Beispiel 1 genannten Phenylsiliconöls versetzt. Allerdings erfolgte die Vernetzung nicht, wie in Beispiel 1 beschrieben, durch Zusatz von Pt-Katalysator, SiH-Vernetzer und Inhibitor Ethinylcyclohexanol. Stattdessen wurden 2,3 g Dicumylperoxid hinzugefügt. Die Vernetzung und Temperung erfolgte wie in Beispiel 1 beschrieben.

**Tabelle 2:**

| | Härte | Weiterreißwiderstand (ASTMD624) | Reißfestigkeit | Reißdehnung | Einreißfestigkeit |
|---|---|---|---|---|---|
| | [Shore A] | [N/mm] | [N/mm2] | [%] | [Eindring -tiefe in mm] |
| Beispiel 4 | 33 | 19 | 10,0 | 850 | 11 |
| Beispiel 5* | 35 | 18 | 9,5 | 750 | 5 |

| | | | | | |
|---|---|---|---|---|---|
| * nicht erfindungsgemäß | | | | | |

Aus Tabelle 2 ist ersichtlich, dass durch Vernetzung via Additionsvernetzung im Vergleich zu peroxidisch vernetzenden Siliconelastomeren eine signifikant erhöhte Einreißfestigkeit realisiert werden kann.

### Beispiel 6* (nicht erfindungsgemäß):

### Herstellung der Grundmasse 6:

Im Unterschied zu Beispiel 3 wurde bei der Grundmassenherstellung nicht eine Kieselsäure mit einer BET-Oberfläche von 150 m²/g verwendet sondern eine mit Hexamethyldisilazan hydrophobierten pyrogenen Kieselsäure mit einer spezifischen Oberfläche nach BET von 400 m²/g und einem Kohlenstoffgehalt von 3,9 Gew.-% eingesetzt.
Die Herstellung der vernetzbaren Mischung, die Vernetzung sowie die anschließende Temperung der additionsvernetzenden Masse erfolgte wie in Beispiel 1 beschrieben.

**Tabelle 3:**

| | Härte | Weiterreißwiderstand (ASTMD624) | Reißfestigkeit | Reißdehnung | Einreißfestigkeit |
|---|---|---|---|---|---|
| | [Shore A] | [N/mm] | [N/mm²] | [%] | [Eindring -tiefe in mm] |
| Beispiel 3 | 30 | 18 | 8,5 | 800 | 10 |
| Beispiel 4 | 33 | 19 | 10,0 | 850 | 11 |
| Beispiel 6* | 35 | 22 | 8,9 | 820 | 7 |

| | | | | | |
|---|---|---|---|---|---|
| * nicht erfindungsgemäß | | | | | |

Aus Tabelle 3 ist ersichtlich, dass durch Verwendung einer pyrogenen Kieselsäure mit einer BET-Oberfläche von 150 bzw. 200 m²/g bessere Einreißfestigkeiten als beim Einsatz von pyrogenen Kieselsäuren mit einer sehr hohen spezifischen BET-Oberfläche von 400 m²/g generiert werden.

### Beispiel 7* (nicht erfindungsgemäß):

Im Unterschied zu Beispiel 4 wurde bei der Herstellung der vernetzbaren Mischung nicht das in Beispiel 1 beschriebene Phenylsiliconöl hinzugefügt. Die Vernetzung sowie die anschließende Temperung der additionsvernetzenden Masse erfolgte wie in Beispiel 1 beschrieben.

### Beispiel 8* (nicht erfindungsgemäß):

Im Unterschied zu Beispiel 4 wurde bei der Herstellung der vernetzbaren Mischung nicht das in Beispiel 1 beschriebene Phenylsiliconöl sondern 16,5 g eines trimethylsiloxy-terminierten Polydimethylsiloxans mit einer Viskosität von 200 mPa·s (25°C) hinzugefügt.
Die Vernetzung sowie die anschließende Temperung der additionsvernetzenden Masse erfolgte wie in Beispiel 1 beschrieben.

**Tabelle 4:**

| | Härte | Weiterreißwiderstand (ASTMD624) | Reißfestigkeit | Reißdehnung | Einreißfestigkeit |
|---|---|---|---|---|---|
| | [Shore A] | [N/mm] | [N/mm2] | [%] | [Eindring -tiefe in mm] |
| Beispiel 4 | 33 | 19 | 10,0 | 850 | 11 |
| Beispiel 7* | 36 | 18 | 9,8 | 870 | 7 |
| Beispiel 8* | 33 | 19 | 9,7 | 820 | 6 |

| | | | | | |
|---|---|---|---|---|---|
| * nicht erfindungsgemäß | | | | | |

Aus Tabelle 4 ist ersichtlich, dass durch Zusatz des Phenylsiliconöls eine erhebliche Verbesserung der Einreißfestigkeit erhalten wird.

### Beispiel 9:

### Herstellung der Grundmasse 9:

In einem Kneter wurden 260 g eines vinyldimethylsiloxyterminierten Polydimethylsiloxans mit einer Viskosität von 15 000 000 mPa·s, welches zusätzlich Vinylmethylsiloxy-Einheiten in der Polymerkette besitzt und einen Anteil an Vinylsiloxy-Einheiten von 0,10 mol-% aufweist, mit 20,6 g α,ω-Dihydroxypolydimethylsiloxan mit einer Viskosität von 40 mPa·s welches zur Hydrophobierung der pyrogenen Kieselsäure benötigt wird, und 62,1 g pyrogener Kieselsäure mit einer spezifischen Oberfläche gemäß BET von 150 m²/g eine Stunde bei 150°C geknetet.
Die Herstellung der vernetzbaren Mischung, die Vernetzung sowie die anschließende Temperung der additionsvernetzenden Masse erfolgte wie in Beispiel 1 beschrieben.

### Beispiel 10:

### Herstellung der Grundmasse 10:

Im Unterschied zur Herstellung der Grundmasse 9 wurden anstatt 20,6 g α,ω-Dihydroxypolydimethylsiloxan 15,4 g α,ω-Dihydroxypolydimethylsiloxan mit einer Viskosität von 40 mPa·s und 7,7 g α,ω-Dihydroxypolyorganosiloxan mit 30 mol-% Vinylmethyl- und 70 mol-% Dimethylsiloxy-Einheiten und einer Viskosität von 45 mPa·s verwendet, um die pyrogene Kieselsäure zu hydrophobieren. Außerdem wurden anstatt der pyrogenen Kieselsäure mit einer spezifischen Oberfläche von 150 m²/g 68,0 g pyrogene Kieselsäure mit einer Oberfläche von 200 m²/g eingesetzt.
Die Herstellung der vernetzbaren Mischung, die Vernetzung sowie die anschließende Temperung der additionsvernetzenden Masse erfolgte wie in Beispiel 1 beschrieben.

**Tabelle 5:**

| | Härte | Weiterreißwiderstand (ASTMD624) | Reißfestigkeit | Reißdehnung | Einreißfestigkeit |
|---|---|---|---|---|---|
| | [Shore A] | [N/mm] | [N/mm²] | [%] | [Eindringtiefe in mm] |
| Beispiel 9 | 29 | 25 | 10,1 | 950 | 12 |
| Beispiel 10 | 52 | 31 | 11,2 | 780 | 10 |

Aus Tabelle 5 ist ersichtlich, dass sich die Einreißfestigkeit insbesondere im niedrigen und mittleren Härtebereich von 20 bis 60 Shore A verbessern lässt.

Die Charakterisierung der Siliconelastomereigenschaften erfolgten gemäß DIN 53505 (Shore A), DIN 53504-S1 (Reißfestigkeit und Reißdehnung), ASTM D 624 B (Weiterreißwiderstand).

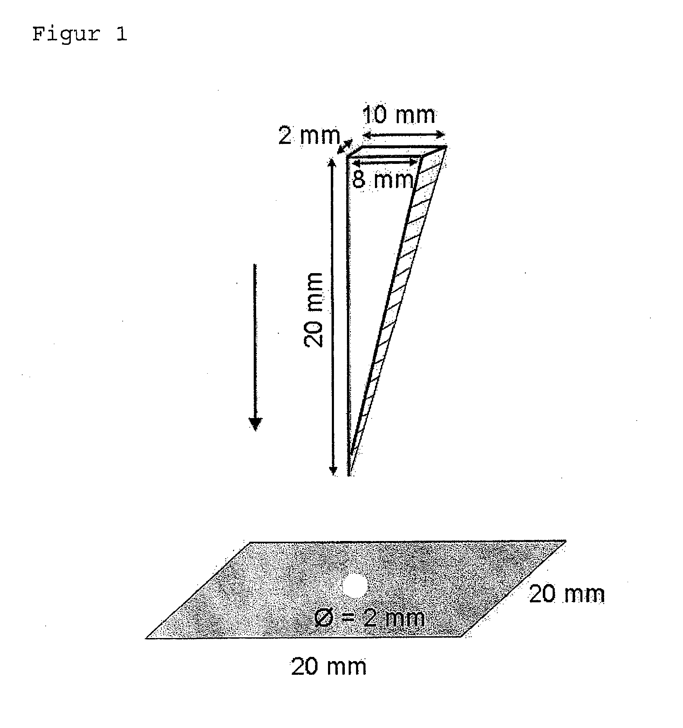

Die Einreißfestigkeit wurde wie in Figur 1 dargestellt, bestimmt:
20*20 mm Probekörper mit einer Dicke von 2 mm und einer Kavität in der Mitte mit einem Durchmesser von 2 mm wurden hergestellt. In die Kavität wurde ein auf einer Seite scharfkantige Werkzeug, wie in Figur 1 dargestellt, mit einer Geschwindigkeit von 10 mm/min eingeführt. Dabei wurde bestimmt, bei welcher Eindringtiefe ein Riss im Siliconelastomer initiiert wird. Es wurden jeweils 5 Probekörper charakterisiert und der Mittelwert aus diesen 5 Messwerten zur Beurteilung herangezogen.

## Patentansprüche

1. Additionsvernetzbare Siliconmassen (M), enthaltend
(A) 100 Gewichtsteile Alkenylgruppen haltiges Polydiorganosiloxan mit mindestens 2 Alkenylgruppen pro Molekül, einer Viskosität von mindestens 1, 000 000 mPa·s, einem off Gehalt < 50 Gew.-ppm und höchstens 0,3 mol-% Alkenylgruppen,
(B) SiH-funktionelles Vernetzungsmittel,
(C) Hydrosilylierungskatalysator,
(D) 10-80 Gewichtsteile eines verstärkenden Füllstoffs mit einer spezifischen Oberfläche von 50 m²/g bis 350 m²/g und
(E) Siliconöl mit einer Viskosität von 20-5000 mPa·s, dessen Reste ausgewählt werden aus Phenyl- und C₁₋₆-Alkylresten, wobei mindestens 5 mol-% aller Reste Phenylreste sind.

2. Additionsvernetzbare Siliconmassen (M) nach Anspruch 1, bei denen die Alkenylgruppen im Alkenylgruppen haltigen Polydiorganosiloxan (A) Vinyl- oder Allylgruppen sind.

3. Additionsvernetzbare Siliconmasse (M) nach Anspruch 1 oder 2, bei denen das SiH-funktionelle Vernetzungsmittel (B) eine siliciumorganische Verbindung oder eine Mischung aus mindestens 2 siliciumorganischen Verbindungen ist, welche mindestens zwei an Silicium gebundene Wasserstoffatome pro Molekül enthalten.

4. Additionsvernetzbare Siliconmassen (M) nach Anspruch 1 bis 3, bei denen die Hydrosilylierungskatalysatoren (C) ausgewählt werden aus den Metallen Platin, Rhodium, Palladium, Ruthenium und Iridium und deren Verbindungen.

5. Additionsvernetzbare Siliconmassen (M) nach Anspruch 1 bis 4, bei denen der verstärkende Füllstoff (D) ausgewählt wird aus gefällten und pyrogenen Kieselsäuren sowie Ruß.

6. Additionsvernetzbare Siliconmassen (M) nach Anspruch 1 bis 5, welche 3 bis 15 Gewichtsteile an Siliconöl (E) enthalten.

7. Additionsvernetzbare Siliconmassen (M) nach Anspruch 1 bis 6, bei denen das Siliconöl (E) aufgebaut ist aus Einheiten, die ausgewählt werden aus Trimethylsiloxy-, Diphenylsiloxy-, Phenylmethylsiloxy- und Dimethylsiloxy-Einheiten.

8. Verfahren zur Herstellung der additionsvernetzbaren Siliconmassen (M) gemäß Anspruch 1 bis 7, bei dem Polyorganosiloxan (A), Siliconöl (E) und Füllstoff (D) gemischt werden und anschließend Vernetzungsmittel (B) und Hydrosilylierungskatalysator (C) zugegeben werden.

9. Siliconelastomere erhältlich durch Vernetzen der additionsvernetzbaren Siliconmassen (M) gemäß Anspruch 1 bis 7.

## Claims

1. Addition-crosslinkable silicone compositions (M) comprising
(A) 100 parts by weight of polydiorganosiloxane containing alkenyl groups, having at least 2 alkenyl groups per molecule, a viscosity of at least 1 000 000 mPa·s, an OH content < 50 ppm by weight, and not more than 0.3 mol% of alkenyl groups,
(B) SiH-functional crosslinking agent,
(C) hydrosilylation catalyst,
(D) 10-80 parts by weight of a reinforcing filler having a specific surface area of 50 m²/g to 350 m²/g, and
(E) silicone oil having a viscosity of 20-5000 mPa·s, its radicals being selected from phenyl radicals and C₁₋₆ alkyl radicals, with at least 5 mol% of all of the radicals being phenyl radicals.

2. Addition-crosslinkable silicone compositions (M) according to Claim 1, wherein the alkenyl groups in the polydiorganosiloxane (A) containing alkenyl groups are vinyl groups or allyl groups.

3. Addition-crosslinkable silicone compositions (M) according to Claim 1 or 2, wherein the SiH-functional crosslinking agent (B) is an organosilicon compound or a mixture of at least 2 organosilicon compounds which comprise at least two silicon-bonded hydrogen atoms per molecule.

4. Addition-crosslinkable silicone compositions (M) according to Claims 1 to 3, wherein the hydrosilylation catalysts (C) are selected from the metals platinum, rhodium, palladium, ruthenium, and iridium and from compounds thereof.

5. Addition-crosslinkable silicone compositions (M) according to Claims 1 to 4, wherein the reinforcing filler (D) is selected from precipitated and fumed silicas and also carbon black.

6. Addition-crosslinkable silicone compositions (M) according to Claims 1 to 5, which comprise 3 to 15 parts by weight of silicone oil (E).

7. Addition-crosslinkable silicone compositions (M) according to Claims 1 to 6, wherein the silicone oil (E) is constructed of units selected from trimethylsiloxy, diphenylsiloxy, phenylmethylsiloxy, and dimethylsiloxy units.

8. Method for producing the addition-crosslinkable silicone compositions (M) according to Claims 1 to 7, wherein polyorganosiloxane (A), silicone oil (E), and filler (D) are mixed and subsequently crosslinking agent (B) and hydrosilylation catalyst (C) are added.

9. Silicone elastomers obtainable by crosslinking the addition-crosslinkable silicone compositions (M) according to Claims 1 to 7.

## Revendications

1. Masses siliconées (M) réticulables par addition, contenant
(A) 100 parties en poids de polydiorganosiloxane contenant des groupes alcényle comprenant au moins 2 groupes alcényle par molécule, présentant une viscosité d'au moins 1 000 000 mPa·s, une teneur en OH < 50 ppm en poids et au plus 0,3% en mole de groupes alcényle,
(B) un réticulant à fonctionnalité SiH,
(C) un catalyseur d'hydrosilylation,
(D) 10-80 parties en poids d'une charge renforçante présentant une surface spécifique de 50 m²/g à 350 m²/g et
(E) de l'huile de silicone présentant une viscosité de 20-5000 mPa.s, dont les radicaux sont choisis parmi les radicaux phényle et C₁₋₆-alkyle, au moins 5% en mole de tous les radicaux étant des radicaux phényle.

2. Masses siliconées (M) réticulables par addition selon la revendication 1, dans lesquelles les groupes alcényle dans le polydiorganosiloxane (A) contenant des groupes alcényle sont des groupes vinyle ou allyle.

3. Masses siliconées (M) réticulables par addition selon la revendication 1 ou 2, dans lesquelles le réticulant (B) à fonctionnalité SiH est un composé organosilicié ou un mélange d'au moins 2 composés organosiliciés, qui contien(nen)t au moins deux atomes d'hydrogène liés au silicium par molécule.

4. Masses siliconées (M) réticulables par addition selon la revendication 1 à 3, dans lesquelles les catalyseurs d'hydrosilylation (C) sont choisis parmi les métaux platine, rhodium, palladium, ruthénium et iridium et leurs composés.

5. Masses siliconées (M) réticulables par addition selon la revendication 1 à 4, dans lesquelles la charge renforçante (D) est choisie parmi les silices précipitées et pyrogènes ainsi que la suie.

6. Masses siliconées (M) réticulables par addition selon la revendication 1 à 5, qui contiennent 3 à 15 parties en poids d'huile de silicone (E).

7. Masses siliconées (M) réticulables par addition selon les revendications 1 à 6, dans lesquelles l'huile de silicone (E) est élaborée à partir d'unités qui sont choisies parmi les unités triméthylsiloxy, diphénylsiloxy, phénylméthylsiloxy et diméthylsiloxy.

8. Procédé pour la préparation des masses siliconées (M) réticulables par addition selon les revendications 1 à 7, dans lequel le polyorganosiloxane (A), l'huile de silicone (E) et la charge (D) sont mélangés puis on y ajoute le réticulant (B) et le catalyseur d'hydrosilylation (C).

9. Elastomères de silicone, pouvant être obtenus par réticulation des masses siliconées (M) réticulables par addition selon les revendications 1 à 7.
